# EUROPÄISCHE PATENTSCHRIFT

(11) **EP 4 156 982 B1**
(45) Veröffentlichungstag und Bekanntmachung des Hinweises auf die Patenterteilung: **28.08.2024**
(21) Anmeldenummer: 21731071.3
(22) Anmeldetag: 01.06.2021
(51) Int. Cl.: A24C 5/35, A24C 5/32, A24C 5/47, B65G 47/14, B65G 47/19, B65G 47/52, B65G 47/84, B65G 47/86

(54) **FÖRDEREINRICHTUNG FÜR STABARTIKEL UND VERFAHREN ZUM BETRIEB**
CONVEYOR DEVICE FOR BAR-FORM ARTICLES AND METHOD FOR OPERATING SAME
DISPOSITIF DE TRANSPORT POUR ARTICLES EN FORME DE BARRE ET SON PROCÉDÉ DE FONCTIONNEMENT

(30) Priorität: 02.06.2020 DE 102020114600
(43) Veröffentlichungstag der Anmeldung: 05.04.2023
(73) Patentinhaber: Körber Technologies GmbH, 21033 Hamburg (DE)
(72) Erfinder: SCHMICK, Clemens, 21502 Geesthacht (DE)
(74) Vertreter: Müller Verweyen
(86) Internationale Anmeldenummer: PCT/EP2021/064651
(87) Internationale Veröffentlichungsnummer: WO 2021/245067

(56) Entgegenhaltungen:
- EP-A1- 2 999 361
- DE-B- 1 235 206
- DE-C1- 19 546 696

## Beschreibung

Die vorliegende Erfindung betrifft eine Fördereinrichtung für die Entnahme von Stabartikeln aus einem Artikelspeicher mit den Merkmalen des Oberbegriffs von Anspruch 1, sowie ein Verfahren zum Betrieb einer Fördervorrichtung mit den Merkmalen des Oberbegriffs von Anspruch 6.

Stabartikel können beispielsweise stabförmige Rauchartikel sein, wie Zigaretten, Zigarillos, Heat Not Burn-Produkte (HNB-Produkte) oder ähnliche Produkte, welche zur Inhalation durch einen Konsumenten vorgesehen sind. Dabei können neben oder statt Tabak auch ätherische oder medizinische Substanzen zur Inhalation vorgesehen sein. Als Stabartikel sind auch Vorprodukte von Rauchartikeln zu verstehen wie z.B. Filterstäbe, Tabakstöcke mit einem durch einen Umhüllungsstreifen formstabilisierten Tabakmaterial, Segmente von HNB-Produkten, wie rohrförmige Kühlabschnitte, geschmacksbeeinflussende Segmente oder dergleichen, welche nachfolgend mit anderen Vorprodukten zu einem fertigen stabförmigen Rauchartikel verbunden werden.

Die Stabartikel werden in Fördereinrichtungen mit einer sehr großen Transportgeschwindigkeit transportiert und in sehr großen Mengen hergestellt und weiterverarbeitet. Dabei werden sie in verschiedenen Stellen des Produktionsablaufes aus einem sehr großen Speicher in einem sehr großen Mengenstrom zugeführt.

Die Stabartikel sind in dem Speicher in einem Stapel mit parallel zueinander ausgerichteten Längsachsen bevorratet, wobei die Stabartikel bevorzugt so ausgerichtet sind, dass ihre Stirnseiten jeweils parallel zueinander ausgerichtete Ebenen bilden, und der Stapel somit eine Dicke aufweist, welche der Länge der Stabartikel in dem Speicher entspricht.

Die Stabartikel werden ausgehend von dem Speicher in die Mulden der Zentraltrommel übergeben und quer zu ihren Längsachsen abtransportiert. Die Entnahmetrommel weist zur Verwirklichung einer hohen Transportkapazität einen vergleichsweise großen Durchmesser mit einer Vielzahl von in der Mantelfläche angeordneten Mulden auf, welche in einem sehr geringen Abstand, also in einer sehr kleinen Teilung angeordnet sind. Ferner wird die Zentraltrommel zur Verwirklichung einer prozesssicheren Übernahme der Stabartikel aus dem Speicher mit einer vergleichsweise kleinen Drehzahl und einer kleinen Umfangsgeschwindigkeit der Mulden angetrieben. Außerdem weist die Zentraltrommel besonders tiefe Mulden, bzw. Mulden mit einer einseitig vergrößerten Wandung auf, damit die Stabartikel prozesssicher aus dem Speicher entnommen werden können.

Die Zuführung der Stabartikel aus dem Speicher zu der Zentraltrommel wird dabei durch die Schwerkraft bewirkt, indem der Speicher oberhalb der Zentraltrommel angeordnet ist und eine der Zentraltrommel zugewandte Öffnung aufweist, durch welche die Stabartikel in Richtung der Zentraltrommel austreten.

Eine Fördereinrichtung ist z.B. aus der Druckschrift EP2999361B1
bekannt; diese weist die im Oberbegriff des Anspruchs 1 genannten Merkmale auf. Andere Fördereinrichtungen aus dem Stand der Technik sind aus DE1235206B und DE19546696C1 bekannt.

Vor diesem Hintergrund liegt der Erfindung die Aufgabe zugrunde, eine Fördereinrichtung und ein Verfahren zu schaffen, welche eine verbesserte Förderung von Stabartikeln aus einem Artikelspeicher angibt.

Zur Lösung der Aufgabe wird eine Fördereinrichtung mit den Merkmalen von Anspruch 1 und ein Verfahren zum Betrieb einer Fördereinrichtung mit den Merkmalen von Anspruch 6 vorgeschlagen. Weitere bevorzugte Ausführungsformen sind den Unteransprüchen, den Figuren und der zugehörigen Beschreibung zu entnehmen.

Gemäß dem Grundgedanken der Erfindung wird nach Anspruch 1 vorgeschlagen, dass die Fördereinrichtung für die Entnahme von Stabartikeln aus einem Artikelspeicher mit mindestens einem Schacht für eine einreihige, queraxiale Führung der Stabartikel versehen ist. In Bezug zu einer Transportrichtung der Stabartikel stromabwärts des Schachtes ist ein drehbares Übergabeelement mit einer Nut für einen Stabartikel angeordnet, welches die Stabartikel für eine queraxiale Abförderung in Mulden einer Zentraltrommel einlegt. Zwischen der stromabwärtigen Öffnung des Schachts und dem Übergabeelement ist ein drehbares Einlegerädchen vorgesehen ist, welches für eine vereinzelte, queraxiale Abgabe von Stabartikeln an das Übergabeelement eingerichtet ist. Die Nut des Übergabeelements ist zur Übernahme der vom Einlegerädchen abgegebenen Stabartikel eingerichtet und mit Unterdruck beaufschlagbar. In der Nut sind vom Einlegerädchen abgegebene Stabartikel mittels Unterdrucks haltbar.

Durch die vorgeschlagene Lösung kann eine besonders schonende Entnahme aus einem Artikelspeicher und Förderung von Stabartikeln auf eine Zentraltrommel erreicht werden, indem zunächst bei der Vereinzelung mittels des drehbaren Einlegerädchen ein Klemmen oder Quetschen des quergeförderten Stabartikels effektiv verhindert wird. Das Einlegerädchen übernimmt hierbei temporär auch eine Sperrfunktion für diejenigen Stabartikel, welche im Produktstrom stromaufwärts des vereinzelt, quergeförderten Stabartikels positioniert sind. Weiterhin erfolgt durch das mit Unterdruck beaufschlagbare Übergabeelement die Förderung ebenfalls sehr schonend für den Stabartikel und insbesondere prozesssicher, da die Übergabe auf die Zentraltrommel sehr präzise gesteuert und kontrolliert erfolgen kann. Der Stabartikel erfährt bei der durch Unterdruck gehaltenen Förderung auf dem Übergabeelement, welches auch als Entnahmenocken bezeichnet werden kann, keinerlei Schleifvorgänge auf der Artikeloberfläche, so dass die Belastung für den Stabartikel minimiert ist. Da die Stabartikel nicht an Maschinenteilen schleifen, wird gleichzeitig erreicht, dass die Standzeit der Maschinenteile nicht durch Schleifspuren bzw. Einschliff und entsprechende Ausfallzeiten reduziert wird. Diese Maßnahme ist im Bereich des Übergabeelements besonders effektiv, da bei der Förderung von Stabartikeln auf eine Zentraltrommel die Stabartikel auf die Geschwindigkeit der Zentraltrommel beschleunigt werden müssen, was entsprechend zu hohen Relativgeschwindigkeiten mit starken Reibwirkungen führen kann.

Gemäß einer vorteilhaften Weiterentwicklung wird vorgeschlagen, dass das Einlegerädchen als Einlegerädchenpaar ausgeführt ist. Diese vorteilhafte Ausführungsform weist zwei zusammenwirkende Einlegerädchen auf, zwischen denen Stabartikel queraxial und vereinzelt ausgefördert werden. Die Ausführung des Einlegerädchens als Einlegerädchenpaar vermindert weiter die Gefahr eines Klemmens oder Quetschens des zu fördernden Stabartikels, da auf eine starre Wandung zum Stützen des Stabartikels gegen ein einzelnes Einlegerädchen verzichtet werden kann. Dies reduziert ebenfalls die Belastung des Stabartikels und verringert unerwünschte Schleifvorgänge an der Fördereinrichtung.

In einer bevorzugten Ausführungsform der Fördereinrichtung sind am oberen Ende des mindestens einen Schachts Drehbolzen und/oder Schwingbolzen angeordnet. Die Drehbolzen und/oder Schwingbolzen sind vorzugsweise im Übergangsbereich zwischen dem Artikelspeicher, in dem die Stabartikel gelagert sind, und dem Schacht für die einreihige, queraxiale Zuführung zum Übergabeelement angeordnet, um den Übergang von einer mehrreihigen bzw. mehrlagigen Anordnung im Artikelspeicher auf eine einreihige Anordnung im Schacht zu verbessern. Der Übergang zu einer einreihigen Anordnung im Schacht kann vor allem durch eine trichterförmige Ausgestaltung des Artikelspeichers zum Schacht hin ermöglicht werden. Die Drehbolzen und/oder Schwingbolzen sind vorteilhaft am Ende dieser trichterförmigen Ausgestaltung angeordnet, um die schonende Förderung der Stabartikel weiter zu verbessern. Die Drehbolzen sind vorzugsweise aktiv angetrieben. In alternativen Ausführungsformen sind auch passive Drehbolzen möglich, die entsprechend des ausgeübten Produktdrucks rotieren. Die Schwingbolzen sind aktiv betrieben und schwingen vorzugsweise mit einer Frequenz von 0,1 Hz bis 100 Hz, weiter vorzugsweise von 20 Hz bis 40 Hz. Die Schwingung erfolgt in bevorzugten Ausgestaltungen um die Längsachse des Schwingbolzens, d.h. die Achse, um die der Schwingbolzen schwingt, ist parallel zu den Hauptachsen der geförderten Stabartikel.

Erfindungsgemäß wird vorgeschlagen, dass das Übergabeelement servoangetrieben ist. Der Antrieb des Übergabeelements mittels eines Servomotors ermöglicht die präzise und differenzierte Bewegungssteuerung des Übergabeelements, so dass die Abnahme des Stabartikels beispielsweise mit deutlich reduzierter Rotationsgeschwindigkeit erfolgen kann. Weiterhin kann in einer möglichen vorteilhaften Weiterentwicklung eine Abnahme in ruhender Stellung des Übergabeelements, d.h. Rotationsgeschwindigkeit ist null, erfolgen. In einer bevorzugten Ausführungsform erfolgt die Übergabe an die Zentraltrommel synchronisiert mit der Geschwindigkeit der Zentraltrommel am Übergabepunkt.

Erfindungsgemäß weist die Fördereinrichtung eine Mehrzahl von nebeneinander angeordneten Schächten mit jeweils zugeordneten Einlegerädchen und Übergabeelementen für die Entnahme von Stabartikeln aus dem Artikelspeicher und die Zuführung zu der Zentraltrommel auf. Auf diese Weise kann mit der Mehrzahl Übergabeelemente eine parallelisierte Übergabe von Stabartikeln auf die Zentraltrommel erfolgen, wodurch die Geschwindigkeit der Zentraltrommel erhöht und/oder die Belastung der Stabartikel bei der Förderung auf die Zentraltrommel verringert werden kann. Bei einer parallelisierten Übergabe auf die Zentraltrommel kann beispielsweise entsprechend der Anzahl n an Schächten und zugeordneten Übergabeelementen die Übergabe von Stabartikeln von einem Übergabeelement nur auf jede n-te Mulde der Zentraltrommel vorgesehen sein.

In einer vorteilhaften Ausführungsform weist die Fördereinrichtung wenigstens zwei Schächte auf, welche aus dem gleichen Artikelspeicher mit Stabartikeln bestückt werden. Unterhalb der zwei Schächte oder auch stromabwärts entlang der Transportrichtung sind zwei Einlegerädchenpaare mit jeweils zwei Einlegerädchen angeordnet, welche vereinzelte, quergeförderte Stabartikel an drei Übergabeelemente abgeben. Die zwei Übergabeelemente weisen vorzugsweise zwei unterschiedliche Übergabepositionen auf der Zentraltrommel auf, wobei das einzelne Übergabeelement in dieser Ausführungsform jeweils nur an jede zweite Mulde der Zentraltrommel Stabartikel übergibt.

Gemäß einer Weiterentwicklung wird vorgeschlagen, dass der Abstand zwischen dem Übernahmepunkt stromabwärts des jeweiligen Einlegerädchen auf das jeweilige Übergabeelement und dem jeweiligen Übergabepunkt zum Einlegen in eine Mulde der Zentraltrommel größer ist als der Abstand der Drehpunkte benachbarter Übergabeelemente. Hierdurch wird ermöglicht, dass an der Fördereinrichtung eine größere Anzahl von Übergabeelementen für das Fördern auf die Zentraltrommel genutzt werden kann, wodurch für die Übergabeelemente eine niedrigere Förderfrequenz mit geringerer Artikelbelastung und höherer Prozessstabilität eingesetzt werden kann.

In einer möglichen vorteilhaften Ausführungsform ist die Nut des Übergabeelements zum Einlegen des Stabartikels in eine Mulde der Zentraltrommel mit Überdruck beaufschlagbar. Hierdurch kann eine verbesserte Steuerung der Übergabe vom Übergabeelement auf die Zentraltrommel erfolgen, da das Halten des Stabartikels mittels der Unterdruckbeaufschlagung in einer kürzeren Zeitspanne beendet werden kann. Zudem kann die Bewegung des Stabartikels vom Übergabeelement zur Zentraltrommel durch die Beaufschlagung mit Überdruck beschleunigt werden.

Gemäß dem Grundgedanken der Erfindung wird nach Anspruch 6 ein Verfahren zum Betrieb einer Fördereinrichtung nach einem der Ansprüche 1 bis 5 mit den folgenden Schritten vorgeschlagen:
- Positionieren der Nut des Übergabeelements in einer Ausrichtung, welcher der stromabwärtigen Öffnung des Schachts zugewandt ist;
- vereinzeltes Ausfördern eines Stabartikels aus dem Schacht durch Drehung des Einlegerädchen;
- Übernahme des Stabartikels auf die Nut des Übergabeelements und Beaufschlagen der Nut des Übergabeelements mit Unterdruck;
- Drehen des Übergabeelements und Beschleunigung des durch den Unterdruck gehaltenen Stabartikels;
- Abschalten der Beaufschlagung der Nut mit Unterdruck und Übergabe in eine Mulde der Zentraltrommel, welche kontinuierlich rotiert.

Das Verfahren ermöglicht eine für die Stabartikel schonende Entnahme der Stabartikel aus dem Schacht bzw. den Schächten bei gleichzeitig hoher Prozesssicherheit. Die Fördereinrichtung wird vorteilhaft kollisionsfrei betrieben.

Weiter wird vorgeschlagen, dass das drehbares Übergabeelement vollständig rotiert. Dies bedeutet, dass das Übergabeelement mit jedem Übergabevorgang eines Stabartikels eine vollständige Kreisbewegung absolviert.

Alternativ wird vorgeschlagen, dass das drehbare Übergabeelement pendelt. Dies bedeutet, dass das Übergabeelement mit jedem Übergabevorgang zwei Richtungswechsel und keine vollständige Kreisbewegung absolviert. Das Übergabeelement bewegt sich von der Übernahme des Stabartikels bis zur Übergabe des Stabartikels auf die Zentraltrommel auf der gleichen Bewegungsbahn wie nach der Übergabe auf die Zentraltrommel zurück zur Position der Übernahme in einer Ausrichtung, welcher der stromabwärtigen Öffnung des Schachts zugewandt ist. Es wird eine vollständige Rotation vermieden, wodurch die Bewegung präzise mittels eines Servoantriebs gesteuert werden kann und die Leitung für die Beaufschlagung mit Unterdruck, ggf. Unterdruck und Überdruck, in der Nut des Übergabeelement besonders einfach ausgeführt werden kann. Ferner kann in diesem Fall der Abstand zwischen einzelnen Schächten der Fördereinrichtung reduziert werden, da der Bewegungsumfang des Übergabeelements kleiner ist.

In einer vorteilhaften Ausführungsform werden alle Übergabeelemente unter der Mehrzahl der Schächte mit der gleichen Förderfrequenz betrieben. Die Förderfrequenz kann beispielsweise der Drehzahl der Übergabeelemente entsprechen. Gemäß einer vorteilhaften Weiterentwicklung wird vorgeschlagen, dass die Übergabeelement mit einem gegeneinander verschobenen Arbeitstakt bei gleicher Förderfrequenz betrieben werden.

Weiter wird vorgeschlagen, dass das Übergabeelement beim Positionieren der Nut des Übergabeelements zur Übernahme in einer Ausrichtung, welche der stromabwärtigen Öffnung des Schachts zugewandt ist, eine minimale Drehgeschwindigkeit aufweist, und bei der Übergabe auf die Zentraltrommel eine maximale Drehgeschwindigkeit aufweist. Entsprechend kann in beiden Positionen der Wechsel bei der Förderung der Stabartikel mit minimaler Relativgeschwindigkeit vorgenommen werden, was die Prozesssicherheit erhöht. Das Übergabeelement dreht dementsprechend in dieser vorteilhaften Ausführungsform nicht mit einer konstanten Geschwindigkeit. In einer vorteilhaften Ausführungsform ist die minimale Geschwindigkeit für die Abnahme des Stabartikels null. In einer weiteren vorteilhaften Ausführungsform beschleunigt das Übergabeelement nach der Übernahme des Stabartikels bis zur Übergabe des Stabartikels. In einer bevorzugten Ausführungsform ist die Drehgeschwindigkeit des Übergabeelements bei der Übergabe auf die Zentraltrommel an die Drehgeschwindigkeit der Zentraltrommel angepasst, so dass die Umfangsgeschwindigkeit in der Nut und in der Mulde im Übergabepunkt gleich sind. Beim Rücklauf des Übergabeelements nach einer Übergabe auf die Zentraltrommel können temporär größere Drehgeschwindigkeiten als die maximale Drehgeschwindigkeit bei der Übergabe gefahren werden, da in diesem Fall kein Stabartikel gehalten werden muss.

Gemäß einer Weiterentwicklung wird vorgeschlagen, dass nach dem Abschalten der Beaufschlagung der Nut mit Unterdruck die Nut zur Übergabe in eine Mulde der Zentraltrommel mit Überdruck beaufschlagt wird.

Die Erfindung wird im Folgenden anhand bevorzugter Ausführungsformen unter Bezugnahme auf die beigefügten Figuren erläutert. Dabei zeigt
- Fig. 1: eine Fördereinrichtung für Stabartikel mit drei Schächten;
- Fig. 2: drei Schächte einer Fördereinrichtung mit einer Zentraltrommel;
- Fig. 3,4,5: Momentaufnahmen von Übergabeelementen in unterschiedlichen Stellungen; und
- Fig. 6: eine Fördereinrichtung für Stabartikel mit einer Zentraltrommel.

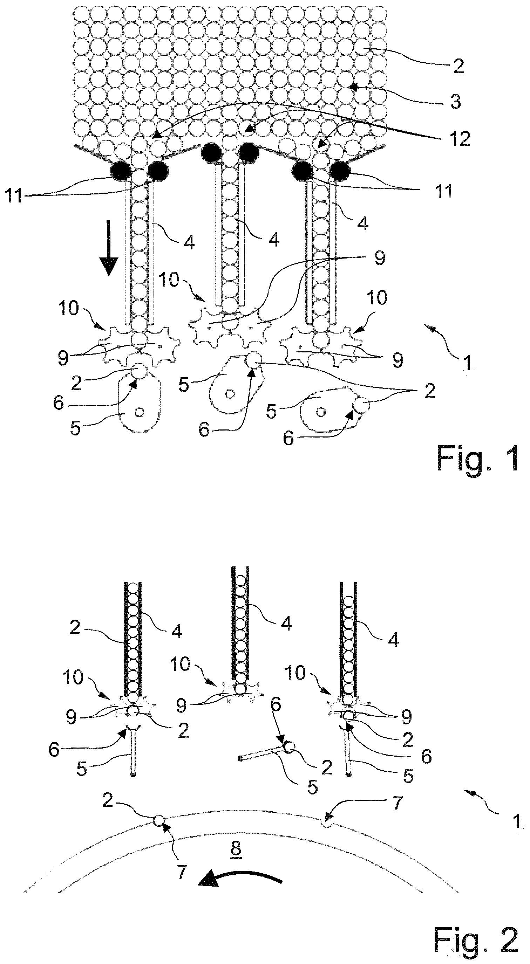

In Figur 1 ist ein Ausführungsbeispiel einer Fördereinrichtung 1 für Stabartikel 2 aus einem Artikelspeicher 3 dargestellt. Die Stabartikel 2 sind im Artikelspeicher 3 mit parallel zueinander ausgerichteten Längsachsen gestapelt bevorratet, wobei die Stabartikel 2 bevorzugt so ausgerichtet sind, dass ihre Stirnseiten jeweils parallel zueinander ausgerichtete Ebenen bilden, und der Stapel somit eine Dicke aufweist, welche der Länge der Stabartikel 2 in dem Artikelspeicher 3 entspricht. Die Stabartikel 2 sind in den Figuren jeweils nur mit ihren Stirnseiten dargestellt. Der Artikelspeicher 3 weist in diesem Ausführungsbeispiel drei trichterförmige Zuläufe 12, welche am oberen Ende von drei Schächten 4 zur einreihigen, queraxialen Führung der Stabartikel 2 münden. Die Schächte 4 schließen sich grundsätzlich unterhalb des Artikelspeichers 3 an, so dass sich entsprechend der Schwerkraft ein Artikelstrom in die Schächte 4 hinein ergibt.

Im Übergangsbereich der trichterförmigen Zuläufe 12 zu den Schächten 4 sind in diesem vorteilhaften Ausführungsbeispiel Drehbolzen 11 vorgesehen, welche ein Verklemmen der Stabartikel 2 beim Übergang auf eine einreihige Stapelung verhindern und dementsprechend für eine schonende Förderung der Stabartikel 2 vorteilhaft sind. In alternativen Ausführungsbeispielen können anstelle oder in Kombination mit den Drehbolzen 11 auch Schwingungsbolzen 11 vorgesehen sein, welche eine vergleichbare Verbesserung der schonenden Förderung aufweisen.

Eine schonende Förderung ermöglicht eine verbesserte Produktion, da auch empfindlichere Stabartikel 2, wie mit einem Umhüllungsstreifen formstabilisiertes Tabakmaterial- und/oder Filtermaterial, beschädigungsfrei gefördert werden kann, so die Fehlerfälle reduziert und die Produktqualität erhöht werden kann.

In den Schächten 4 werden die Stabartikel 2 einreihig, queraxial, d.h. senkrecht zu ihrer Längs- bzw. Hauptachse, stromabwärts gefördert. An der stromabwärtigen Öffnung der drei Schächte 4 sind jeweils Einlegerädchen 9 angeordnet. Die Einlegerädchen 9 können auch als Muldentrommel bezeichnet werden, und weisen über den gesamten Umfang dicht beieinander angeordnete Vertiefungen für Stabartikel 2 auf. In diesem Ausführungsbeispiel sind die Einlegerädchen 9 unterhalb der Schächte 4 als Einlegerädchenpaar 10 ausgeführt. Ein Einlegerädchenpaar 10 umfasst zwei Einlegerädchen 9, welche synchronisiert, gegenläufig drehen, so dass Stabartikel 2 zwischen dem Paar Einlegerädchen 9 vereinzelt gefördert werden können. Beim Einlegerädchenpaar 10 wird kein Gegendruck im Vergleich einer zum geförderten Stabartikel 2 unbewegten Oberfläche benötigt, so dass eine besonders schonende Vereinzelung mit wenig Reibung am Stabartikel 2 erreicht werden kann. Weiterhin werden mittels der Einlegerädchen 9 Produktquetschungen und fehlerhafte Vereinzelungen vermieden.

Das Einlegerädchenpaar 10 gibt jeweils einen vereinzelten Stabartikel 2 queraxial an ein Übergabeelement 5 ab, welches in Bezug auf den Produktstrom stromabwärts angeordnet ist. Im Ausführungsbeispiel der Figur 1 sind die Übergabeelemente 5 unterhalb der Schächte 4 angeordnet, wobei die Schächte 4 geradlinig verlaufen.

In alternativen Ausführungsbeispielen sind auch gekrümmte Verläufe der Schächte 4 möglich, so dass von der Figur 1 abweichende, stromabwärtige Anordnungen der Übergabeelemente 5 vorteilhaft sein können.

Das stromabwärts zur Öffnung des Schachtes 4 angeordnete Übergabeelement 5 weist eine Nut 6 auf, welche mit Unterdruck beaufschlagbar ist. Die Oberfläche der Nut 6 des Übergabeelements 5 weist daher luftdurchlässige Bereiche auf, über die eine Absaugung oder auch Saugluft angeschlossen ist, so dass ein Stabartikel 2 mittels des Unterdrucks zwischen Nut 6 und Stabartikel 2 in der Nut 6 gehalten werden kann.

Für die Übernahme der Stabartikel 2 dreht das Übergabeelement 5 in eine dem Einlegerädchenpaar 10 zugewandte Position bzw. Übernahmeposition. Die Nut 6 ist somit gegen die Transportrichtung bzw. gegen den Produktstrom gerichtet, um den vom Einlegerädchenpaar 10 vereinzelt ausgeförderten Stabartikel 2 übernehmen zu können. Der von den beiden Einlegerädchen 9 des Einlegerädchenpaars 10 freigegebene Stabartikel 2 fällt in die Nut 6 des Übergabeelements 5, wobei die Nut 6 mit Unterdruck beaufschlagt ist, um den Stabartikel 2 in der Nut 6 zu halten.

Die Übergabeelemente 5 legen die Stabartikel 2 anschließend in die Mulden 7 der kontinuierlich rotierenden Zentraltrommel 7 ein, welche in der Darstellung der Figur 1 nicht gezeigt ist.

Die Figur 2 zeigt den stromabwärtigen Bereich der Fördereinrichtung 1 mit der Zentraltrommel 7, wobei der Artikelspeicher 3 zur Vereinfachung nicht dargestellt ist. Es sind in der Darstellung der Figur 2 ebenfalls drei nebeneinander, angeordnete Schächte 4 mit jeweils zugeordneten Einlegerädchenpaaren 10 und Übergabeelementen 5 der Fördereinrichtung 1 vorgesehen.

In alternativen Ausführungsbeispielen kann nur ein Schacht 4 mit jeweils zugeordnetem Einlegerädchenpaar 10 und Übergabeelement 5 vorgesehen sein. Die Verwendung mehrerer Schächte 4 ermöglicht eine Anpassung der Förderkapazität der Fördereinrichtung 1 an den von der Zentraltrommel 7 geförderten Produktstrom und somit auch an den Durchsatz einer Herstellmaschine für stabförmige Produkte.

In der Darstellung der Figur 2 ist eine Momentaufnahme im Betrieb mit drei Übergabeelementen 5 in unterschiedlichen Phasen bzw. Ausrichtungen gezeigt. Das linke Übergabeelement 5 hat eine dem stromaufwärts angeordneten Einlegerädchenpaar 10 zugewandte Ausrichtung eingenommen. Die Einlegerädchen 9 des Einlegerädchenpaars 10 haben einen Stabartikel 2 bereits vereinzelt, sich aber noch nicht soweit gedreht, dass der Stabartikel 2 abgegeben wird.

Die Abgabe des Stabartikels 2 ist beim rechten Übergabeelement 5 zu erkennen, dessen Arbeitstakt im Vergleich zeitlich leicht vorverlagert ist. Das rechte Einlegerädchenpaar 10 hat sich gegenüber dem linken Einlegerädchenpaar 10 bereits weitergedreht, so dass der Stabartikel 2 freigegeben bzw. ausgefördert wird. Dieser fällt entsprechend der Anordnung aus dem Einlegerädchenpaar 10 heraus in die Nut 6 des Übergabeelements 5, in der der Stabartikel 2 angesaugt wird.

Das mittlere Übergabeelement 5 in der Figur 2 ist in der Abfolge bereits weiter fortgeschritten. Der Stabartikel 2 wird in der mit Unterdruck beaufschlagten Nut 6 gehalten während das Übergabeelement 5 sich im Uhrzeigersinn gedreht hat. Der Stabartikel 2 wird entsprechend mitgenommen und beschleunigt. Bei der Drehbewegung des Übergabeelements 5 ist aufgrund der durch den Unterdruckanschluss in der Nut 6 bewirkten Unterdruck und der resultierenden Haltekraft am Stabartikel 2 kein Gegenlager für das Halten des Stabartikels 2 in der Nut 6 erforderlich. Somit besteht auch kein Reibkontakt zu einem etwaigen Gegenlager, was eine schonende Förderung und Entnahme der Stabartikel 2 aus dem Artikelspeicher 3 bewirkt.

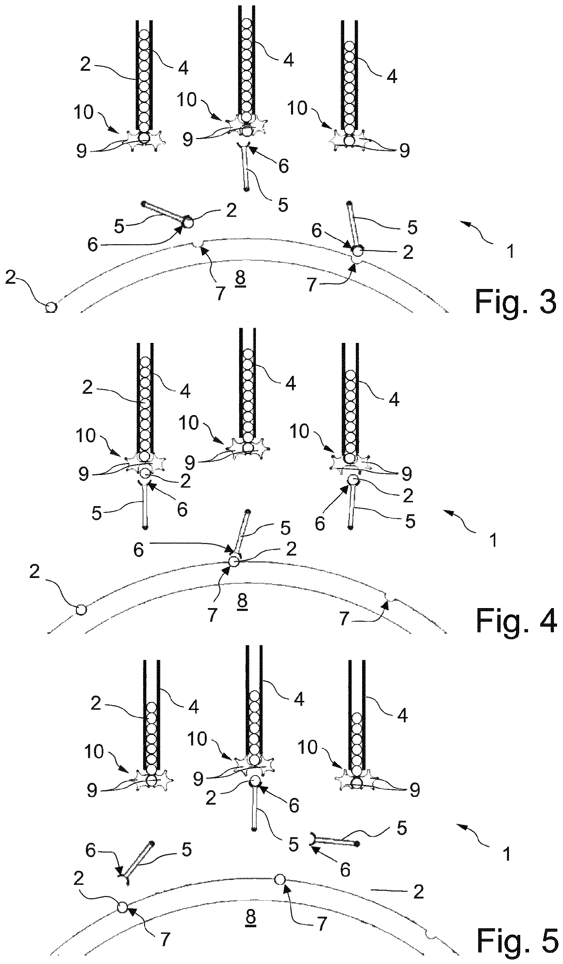

Figur 3 zeigt den Ausschnitt der Fördereinrichtung 1 aus der Figur 2 zu einem Zeitpunkt, welcher ungefähr einen halben Arbeitstakt der Übergabeelemente 5 später ist. In dieser Momentaufnahme halten das linke und rechte Übergabeelement 5 jeweils den Stabartikel 2 aus der Figur 2 und drehen sich zu den Mulden 7 der kontinuierlich rotierenden Zentraltrommel 8 hin. Das rechte Übergabeelement 5 befindet sich kurz vor dem Übergabezeitpunkt und auch vor dem Übergabepunkt an die Mulde 7 der Zentraltrommel 8. Die Übergabe an die Zentraltrommel 8 erfolgt synchronisiert, d.h. die Nut 6 des Übergabeelements 5 und die Mulde 7 der Zentraltrommel 8 weisen am Übergabeort bzw. Übergabepunkt einen minimalen Abstand auf und ihre Geschwindigkeiten sind für den Übergabezeitpunkt angeglichen, so dass eine prozesssichere Übergabe des Stabartikels 2 erfolgen kann. Die Beaufschlagung mit Unterdruck in der Nut 6 wird entsprechend aufgelöst, so dass der Stabartikel 2 freigegeben wird und an die Mulde 7 der Zentraltrommel 8 übergeben wird, welches den Stabartikel 2 auf der Zentraltrommel 8 für die weitere Verarbeitung queraxial abfördert.

Die Figur 4 stellt eine weitere Momentaufnahme des Ausschnitts der Fördereinrichtung 1 da, in der im Vergleich zur Figur 2 ungefähr die Zeit eines Arbeitstakts der Übergabeelemente 5 vergangen ist. Das mittlere Übergabeelement 5 hat den Stabartikel 2 auf die Mulde 7 übergeben, dieser befindet sich somit bereits hinter dem Übergabepunkt auf der sich drehenden Zentraltrommel 8 und wird auf dieser queraxial gefördert. Die weiteren Übergabeelemente 5 links und rechts sind in dieser Momentaufnahme in einer Stellung, die dem jeweiligen Einlegerädchenpaar 10 zugewandt ist. Das linke Einlegerädchenpaar 10 hat den Stabartikel 2 gerade freigegeben, so dass dieser in die Nut 6 fällt. Das rechte Übergabeelement 5 hat den Stabartikel 2 bereits übernommen, hält diesen mit Hilfe des Unterdrucks fest.

In diesem vorteilhaften Ausführungsbeispiel hat das Übergabeelement 5, wenn es für die Übernahme des Stabartikels 2 zum Einlegerädchenpaar 10 ausgerichtet bzw. positioniert ist, die geringste Drehgeschwindigkeit während des Arbeitstaktes. Wogegen bei der Übergabe des Stabartikels 2 in die Mulde 7 die Drehgeschwindigkeit ihr Maximum erreicht. Das Übergabeelement 5 beschleunigt sobald der Stabartikel 2 in der Nut 6 aufgenommen wurde, und verzögert nach der Übergabe wieder. Dies ist auch in der Zusammenschau der Figuren 2 und 4 zu erkennen, die zeitlich ungefähr den gleichen Zeitpunkt in Bezug zum Arbeitstakt zeigen, wobei alle Übergabeelemente 5 der Fördereinrichtung 1 vorzugsweise die gleiche Arbeitstaktdauer aufweisen. Das linke und rechte Übergabeelement 5 sind der Öffnung des Schachts 4 zugewandt und führen nur eine kleine Winkeländerungen zwischen den beiden Momentaufnahmen auf. Dagegen führt das mittlere Übergabeelement 5 zwischen den beiden Momentaufnahmen ungefähr eine Viertelumdrehung aus, da das Übergabeelement 5 für die Übergabe auf die Zentraltrommel 8 beschleunigt.

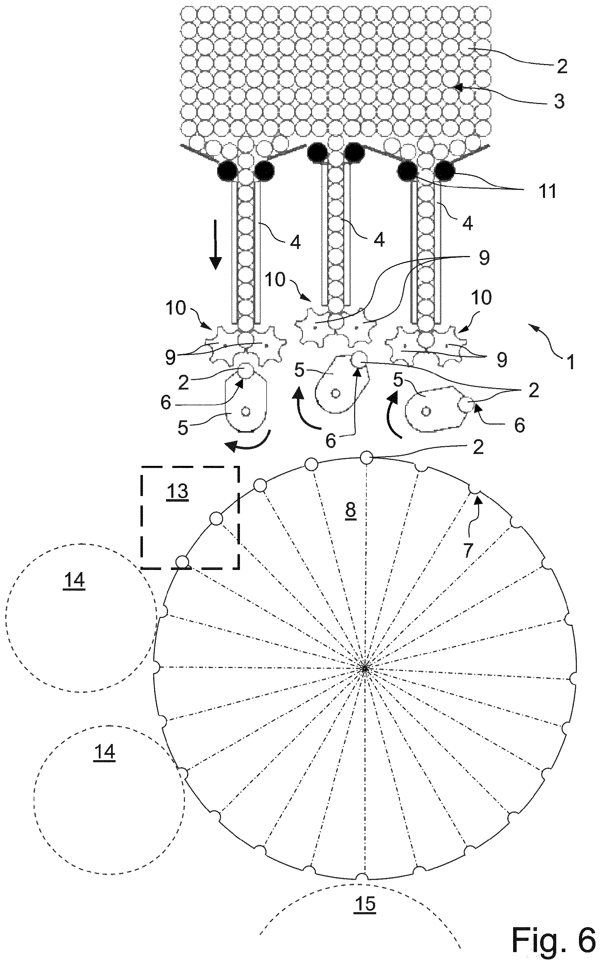

In der Momentaufnahme der Figur 6 ist an dem linken und rechten Übergabeelement 5 erkennbar, dass die Übergabeelemente 5 nach der Übergabe des Stabartikels 2 weiter in die gleiche Richtung rotieren, bis sie wieder die obere, der Öffnung des Schachtes 4 zugewandten Position erreichen. Die Übergabeelemente 5 führen somit in einem Arbeitstakt in diesem Ausführungsbeispiel eine vollständige Rotation aus, wobei während der Rotation keine gleichmäßige Drehgeschwindigkeit vorliegt. Die vollständige Rotation verhindert dabei in einfacher Weise die Kollision des Übergabeelements 5 mit Stabartikeln 2, die stromaufwärts von einem anderen Übergabeelement 5 auf die Zentraltrommel 8 übergeben wurden.

Die Figur 6 zeigt das Ausführungsbeispiel der Figur 1 mit einer Zentraltrommel 8, auf die die Stabartikel 2 durch die Fördereinrichtung 1 queraxial gefördert werden. Ein Übergabeelement 5 legt entsprechend der Anzahl n an Schächten 4 eine nur in jede n-te Mulde 7 auf der Zentraltrommel 8 einen Stabartikel 2 ab.

Die auf der Zentraltrommel 8 queraxial geförderten Stabartikel 2 können verschiedenen Weiterverarbeitungsschritten zugeführt werden. Die Stabartikel 2 können beispielsweise auf der Zentraltrommel 8 geschnitten werden, beispielsweise in einem Schneidbereich 13. Die geschnittenen Segmente können anschließend von Satellitentrommeln 14 gestaffelt werden, wobei die Segmente der Stabartikel 2 auch geschoben werden können, was durch Druckluft oder durch kurvengesteuerte Mulden erfolgen kann. Anschließend können nach einer Ablage auf einer Folgetrommel oder auch Einlegetrommel 15 weitere Bearbeitungsschritte folgen.

## Patentansprüche

1. Fördereinrichtung (1) für die Entnahme von Stabartikeln (2) aus einem Artikelspeicher (3)
- mit mindestens einem Schacht (4) für eine einreihige, queraxiale Führung der Stabartikel (2), wobei
- in Bezug zu einer Transportrichtung der Stabartikel (2) stromabwärts des Schachtes (4) ein drehbares Übergabeelement (5) mit einer Nut (6) für einen Stabartikel (2) angeordnet ist, welches die Stabartikel (2) für eine queraxiale Abförderung in Mulden (7) einer Zentraltrommel (8) einlegt,
**dadurch gekennzeichnet, dass**
- zwischen der stromabwärtigen Öffnung des Schachts (4) und dem Übergabeelement (5) ein drehbares Einlegerädchen (9) vorgesehen ist, welches für eine vereinzelte, queraxiale Abgabe von Stabartikeln (2) an das Übergabeelement (5) eingerichtet ist, wobei
- die Nut (6) des Übergabeelements (5) zur Übernahme der vom Einlegerädchen (9) abgegebenen Stabartikel (2) eingerichtet und mit Unterdruck beaufschlagbar ist, in der vom Einlegerädchen (9) abgegebene Stabartikel (2) mittels Unterdrucks haltbar sind, wobei
- das Übergabeelement (5) servoangetrieben ist, und
- die Fördereinrichtung (1) eine Mehrzahl von nebeneinander angeordneten Schächten (4) mit jeweils zugeordneten Einlegerädchen (9) und Übergabeelementen (5) für die Entnahme von Stabartikeln (2) aus dem Artikelspeicher (3) und Zuführung zu der Zentraltrommel (8) aufweist.

2. Fördereinrichtung (1) nach Anspruch 1, **dadurch gekennzeichnet, dass** das Einlegerädchen (9) als Einlegerädchenpaar (10) ausgeführt ist.

3. Fördereinrichtung (1) nach einem der vorangehenden Ansprüche, **dadurch gekennzeichnet, dass** am oberen Ende des mindestens einen Schachts (4) Drehbolzen und/oder Schwingbolzen (11) angeordnet sind.

4. Fördereinrichtung (1) nach einem der vorangehenden Ansprüche, **dadurch gekennzeichnet, dass** der Abstand zwischen dem Übernahmepunkt stromabwärts des jeweiligen Einlegerädchen (9) auf das jeweilige Übergabeelement (5) und dem jeweiligen Übergabepunkt zum Einlegen in eine Mulde (7) der Zentraltrommel (8) größer ist als der Abstand der Drehpunkte benachbarter Übergabeelemente (5) .

5. Fördereinrichtung (1) nach einem der vorangehenden Ansprüche, **dadurch gekennzeichnet, dass** die Nut (6) des Übergabeelements (5) zum Einlegen des Stabartikels (2) in eine Mulde (7) der Zentraltrommel (8) mit Überdruck beaufschlagbar ist.

6. Verfahren zum Betrieb einer Fördereinrichtung (1) nach einem der vorangehenden Ansprüche, **gekennzeichnet, durch** die folgenden Schritte:
- Positionieren der Nut (6) des Übergabeelements (5) in einer Ausrichtung, welche der stromabwärtigen Öffnung des Schachts (4) zugewandt ist;
- vereinzeltes Ausfördern eines Stabartikels (2) aus dem Schacht (4) durch Drehung des Einlegerädchen (9);
- Übernahme des Stabartikels (2) auf die Nut (6) des Übergabeelements (5) und Beaufschlagen der Nut (6) des Übergabeelements (5) mit Unterdruck;
- Drehen des Übergabeelements (5) und Beschleunigung des durch den Unterdruck gehaltenen Stabartikels (2);
- Abschalten der Beaufschlagung der Nut (6) mit Unterdruck und Übergabe in eine Mulde (7) der Zentraltrommel (8), welche kontinuierlich rotiert.

7. Verfahren nach Anspruch 6, **dadurch gekennzeichnet, dass** das drehbare Übergabeelement (5) vollständig rotiert.

8. Verfahren nach Anspruch 6, **dadurch gekennzeichnet, dass** das drehbares Übergabeelement (5) pendelt.

9. Verfahren nach einem der Ansprüche 6 bis 8 unter Rückbezug auf einen der Ansprüche 1 bis 5, **dadurch gekennzeichnet, dass** alle Übergabeelemente (5) unter der Mehrzahl der Schächte (4) mit der gleichen Förderfrequenz betrieben werden.

10. Verfahren nach einem der Ansprüche 6 bis 9, **dadurch gekennzeichnet, dass** das Übergabeelement (5) beim Positionieren der Nut (6) des Übergabeelements (5) in einer Ausrichtung, welche der stromabwärtigen Öffnung des Schachts (4) zugewandt ist, eine minimale Drehgeschwindigkeit aufweist, und bei der Übergabe auf die Zentraltrommel (8) eine maximale Drehgeschwindigkeit aufweist.

11. Verfahren nach einem der Ansprüche 6 bis 10, **dadurch gekennzeichnet, dass** nach dem Abschalten der Beaufschlagung der Nut (6) mit Unterdruck die Nut (6) zur Übergabe in eine Mulde (7) der Zentraltrommel (8) mit Überdruck beaufschlagt wird.

## Claims

1. Conveying device (1) for removing bar-form articles (2) from an article storage means (3)
- having at least one shaft (4) for single-row, transverse-axial guidance of the bar-form articles (2), wherein
- a rotatable transfer element (5) having a groove (6) for a bar-form article (2) is arranged downstream of the shaft (4) in relation to a transport direction of the bar-form articles (2), which element inserts the bar-form articles (2) into troughs (7) of a central drum (8) for transverse-axial discharge, **characterised in that**
- a rotatable insert wheel (9) is provided between the downstream opening of the shaft (4) and the transfer element (5), which wheel is designed for individual, transverse-axial delivery of bar-form articles (2) to the transfer element (5), wherein
- the groove (6) of the transfer element (5) is designed to receive the bar-form articles (2) delivered by the insert wheel (9) and can be supplied with negative pressure, in which bar-form articles (2) delivered by the insert wheel (9) can be held by means of negative pressure, wherein
- the transfer element (5) is servo-driven, and
- the conveying device (1) comprises a plurality of shafts (4) arranged next to one another, each having associated insert wheels (9) and transfer elements (5) for removing bar-form articles (2) from the article storage means (3) and feeding them to the central drum (8).

2. Conveying device (1) according to claim 1, **characterised in that** the insert wheel (9) is designed as a pair of insert wheels (10).

3. Conveying device (1) according to any of the preceding claims, **characterised in that** pivot pins and/or swing pins (11) are arranged at the upper end of the at least one shaft (4).

4. Conveying device (1) according to any of the preceding claims, **characterised in that** the distance between the reception point, downstream of the relevant insert wheel (9), on the relevant transfer element (5) and the relevant transfer point for insertion into a trough (7) of the central drum (8) is greater than the distance between the pivot points of adjacent transfer elements (5).

5. Conveying device (1) according to any of the preceding claims, **characterised in that** the groove (6) of the transfer element (5) can be supplied with overpressure for inserting the bar-form article (2) into a trough (7) of the central drum (8).

6. Method for operating a conveying device (1) according to any of the preceding claims, **characterised by** the following steps:
- positioning the groove (6) of the transfer element (5) in an orientation facing the downstream opening of the shaft (4);
- individually conveying a bar-form article (2) out of the shaft (4) by rotating the insert wheel (9);
- receiving the bar-form article (2) in the groove (6) of the transfer element (5) and supplying negative pressure to the groove (6) of the transfer element (5);
- rotating the transfer element (5) and accelerating the bar-form article (2) held by means of the negative pressure;
- switching off the supply of negative pressure to the groove (6) and transfer into a trough (7) of the central drum (8), which rotates continuously.

7. Method according to claim 6, **characterised in that** the rotatable transfer element (5) rotates completely.

8. Method according to claim 6, **characterised in that** the rotatable transfer element (5) oscillates.

9. Method according to any of claims 6 to 8 with reference back to any of claims 1 to 5, **characterised in that** all transfer elements (5) of the plurality of shafts (4) are operated with the same conveying frequency.

10. Method according to any of claims 6 to 9, **characterised in that** the transfer element (5) has a minimum rotational speed when positioning the groove (6) of the transfer element (5) in an orientation facing the downstream opening of the shaft (4), and has a maximum rotational speed when transferring to the central drum (8).

11. Method according to any of claims 6 to 10, **characterised in that,** after switching off the supply of negative pressure to the groove (6), the groove (6) is supplied with overpressure for transfer into a trough (7) of the central drum (8).

## Revendications

1. Dispositif de transport (1) pour le prélèvement d'articles en bâtonnets (2) d'un magasin d'articles (3)
- avec au moins une goulotte (4) pour un guidage transversal à l'axe, en une rangée, des articles en bâtonnets (2), dans lequel
- un élément de transfert rotatif (5) avec une gorge (6) pour un article en bâtonnet (2) est disposé en aval de la goulotte (4) par rapport à une direction de transport des articles en bâtonnets (2), lequel insère les articles en bâtonnets (2) dans des creux (7) d'un tambour central (8) pour une évacuation transversale à l'axe, **caractérisé en ce que**
- entre l'ouverture côté aval de la goulotte (4) et l'élément de transfert (5), il est prévu une molette d'insertion rotative (9), qui est conçue pour une délivrance individuelle, transversale à l'axe, d'articles en bâtonnets (2) à l'élément de transfert (5), dans lequel
- la gorge (6) de l'élément de transfert (5) est conçue pour prendre en charge les articles en bâtonnets (2) délivrés par la molette d'insertion (9) et peut être mise en dépression, dans laquelle gorge les articles en bâtonnets (2) délivrés par la molette d'insertion (9) peuvent être maintenus par dépression, dans lequel
- l'élément de transfert (5) est servo-entraîné, et
- le dispositif de transport (1) présente une pluralité de goulottes (4) disposées les unes à côté des autres avec des molettes d'insertion (9) et des éléments de transfert (5) respectivement associés pour le prélèvement d'articles en bâtonnets (2) dans le magasin d'articles (3) et leur amenée au tambour central (8).

2. Dispositif de transport (1) selon la revendication 1, **caractérisé en ce que** la molette d'insertion (9) est réalisée sous la forme d'une paire de molettes d'insertion (10).

3. Dispositif de transport (1) selon l'une des revendications précédentes, **caractérisé en ce que** des tourillons et/ou des pivots (11) sont disposés à l'extrémité supérieure de ladite au moins une goulotte (4).

4. Dispositif de transport (1) selon l'une des revendications précédentes, **caractérisé en ce que** la distance entre le point de prise en charge en aval de la molette d'insertion (9) respective sur l'élément de transfert (5) respectif et le point de transfert respectif pour l'insertion dans un creux (7) du tambour central (8) est supérieure à la distance des centres de rotation d'éléments de transfert (5) voisins.

5. Dispositif de transport (1) selon l'une des revendications précédentes, **caractérisé en ce que** la gorge (6) de l'élément de transfert (5) peut être soumise à une surpression pour l'insertion de l'article en bâtonnet (2) dans un creux (7) du tambour central (8).

6. Procédé de fonctionnement d'un dispositif de transport (1) selon l'une des revendications précédentes, **caractérisé par** les étapes suivantes :
- positionnement de la gorge (6) de l'élément de transfert (5) dans une orientation faisant face à l'ouverture côté aval de la goulotte (4) ;
- décharge individualisée un article en bâtonnet (2) de la goulotte (4) par rotation de la molette d'insertion (9) ;
- prise en charge de l'article en bâtonnet (2) sur la gorge (6) de l'élément de transfert (5) et mise en dépression de la gorge (6) de l'élément de transfert (5) ;
- rotation de l'élément de transfert (5) et accélération de l'article en bâtonnet (2) maintenu par la dépression ;
- arrêt de la mise en dépression de la gorge (6) et transfert dans un creux (7) du tambour central (8) qui tourne en continu.

7. Procédé selon la revendication 6, **caractérisé en ce que** l'élément de transfert rotatif (5) effectue une rotation complète.

8. Procédé selon la revendication 6, **caractérisé en ce que** l'élément de transfert rotatif (5) effectue un mouvement pendulaire.

9. Procédé selon l'une des revendications 6 à 8, en référence à l'une des revendications 1 à 5, **caractérisé en ce que** tous les éléments de transfert (5) sous la pluralité de goulottes (4) sont actionnés à la même fréquence de transport.

10. Procédé selon l'une des revendications 6 à 9, **caractérisé en ce que** l'élément de transfert (5) présente une vitesse de rotation minimale lors du positionnement de la gorge (6) de l'élément de transfert (5) dans une orientation faisant face à l'ouverture côté aval de la goulotte (4) et une vitesse de rotation maximale lors du transfert au tambour central (8).

11. Procédé selon l'une des revendications 6 à 10, **caractérisé en ce qu'**après l'arrêt de la mise en dépression de la gorge (6), la gorge (6) est mise en surpression pour le transfert dans un creux (7) du tambour central (8).
